# EUROPEAN PATENT APPLICATION

(11) **EP 4 790 290 A1**
(43) Date of publication of application: **12.08.2026**
(21) Application number: 25156105.6
(22) Date of filing: 05.02.2025
(51) Int. Cl.: F16L 1/26, F16L 1/16

(54) **A SUBSEA BUNDLE CUTTER AND METHODS OF RECOVERING A SUBSEA COMPOSITE PIPELINE ASSEMBLY**

(71) Applicant: SDJ Innovate Limited, Hexham, Northumberland NE46 3RU (GB)
(72) Inventor: JUPP, Sven David, Hexham, NE46 3RU (GB); CRAWFORD, Andrew Duncan, Hexham, NE46 3RU (GB)
(74) Representative: Scintilla Intellectual Property Ltd

(57) **Abstract**

A submersible bundle cutter (600) for cutting a subsea composite pipeline assembly having a first carrier pipe extending in a longitudinal direction (116) , the bundle cutter(600) comprising: a frame body (302) configured to interface with a submersible vehicle and/or an umbilical cable;
a bundle cutting mechanism (504) coupled to the frame body configured to cut a first window extending in the longitudinal direction.

## Description

### TECHNICAL FIELD

The present disclosure relates to a subsea bundle cutter; in particular a subsea bundle cutter and methods of recovering a subsea composite pipeline assembly.

### BACKGROUND

Subsea composite pipeline assemblies are critical components of offshore oil and gas infrastructure, designed to transport fluids, power, and data between subsea wells and host facilities. One such example of a subsea compositive pipeline assembly is a subsea bundle installation. These subsea bundle installations are often several kilometers in length, are composed of flowlines, control cables, and other elongate elements enclosed within a rigid carrier pipe for mechanical protection, corrosion resistance, and thermal insulation. While these systems are robustly engineered for decades of underwater operation, changes in field requirements, decommissioning mandates, or refurbishment needs necessitate their eventual recovery from the seabed.

Recovering subsea bundles is a complex process due to their significant weight, often reaching hundreds or thousands of tonnes, and their size. The recovery is further complicated by environmental factors such as seabed conditions, marine growth, and hydrostatic pressures. Additionally, modern environmental regulations require careful handling to avoid releasing residual fluids or damaging marine ecosystems.

Subsea bundles installations are often ballasted with seawater during installation to sink and stabilize them on the seabed. One proposed method of recovery is dewatering the bundle to remove this ballast as any residual water can destabilize the bundle in principle allowing it to be lifted or towed. It may be necessary to tow the subsea composite pipeline assembly over other subsea assets to enable refurbishment or decommissioning, any loss of integrity of subsea composite pipeline assembly could result in considerable damage to other subsea oil and gas assets with associated risks to the environment and economical risk due to loss of production.

Dewatering bundles for recovery presents serious challenges and risks and it would be advantageous to provide an alternative improved solution.

### SUMMARY

According to a first aspect of the disclosure there is provided a submersible bundle cutter for cutting a subsea composite pipeline assembly having a first carrier pipe extending in a longitudinal direction, the bundle cutter comprising: a frame body configured to interface with a submersible vehicle and/or an umbilical cable; a bundle cutting mechanism coupled to the frame body configured to cut a first window extending in the longitudinal direction.

Optionally, the carrier pipe has an outer circumference, the submersible bundle cutter comprising: a releasably securing arrangement coupled to the frame body and configured to releasably secure the submersible bundle cutter to the first carrier pipe.

Optionally, the releasably securing arrangement comprises: a first moveable arm arrangement extending outwardly in a radial direction from the frame body and configured to selectively grapple the outer circumference; a second moveable arm arrangement extending outwardly in a radial direction from the frame body and configured to selectively grapple the outer circumference.

Optionally, the first and/or second movable arm arrangement comprises at least one of: a clamp configured to grip the outer circumference; and/or a roller guide configured to support wheelable traversal of the submersible bundle cutter along the carrier pipe.

Optionally, the submersible bundle cutter comprises: a driving unit coupled to the frame and configured to provide locomotion to the submersible bundle thereby moveably repositioning the submersible bundle cutter at least in the longitudinal direction.; and wherein the diving unit comprises: one or more treads configured to traverse the first carrier pipe.

Optionally, the subsea bundle cutter is releasably coupled to a submersible craft configured to position the submersible bundle cutter in the longitudinal direction.

Optionally, the bundle cutting mechanism comprises: i) a first cutting track arranged to provide a first groove that hemi-circumferential follows the outer circumference; or ii) a first cutting arm configured to be movably positionable on the outer circumference; a first cutting head coupled to the first groove or the first cutting arm and the first cutting head is moveably positionable on the outer circumference, and wherein the first cutting head is configured to sever the first carrier pipe.

Optionally, the bundle cutting mechanism comprises: i) a second cutting track arranged to provide a second groove that hemi-circumferential follows the outer circumference; or ii) a second cutting arm configured to be movably positionable on the outer circumference; a second cutting head coupled to the first groove or the second cutting arm and the second cutting head is moveably positionable on the outer circumference, and wherein the second cutting head is configured to sever the first carrier pipe.

Optionally, in use the first cutting track is forwardly positioned in longitudinal direction and the second cutting track is rearwardly positioned in the longitudinal direction

According to a second aspect of the disclosure there is provided a method of recovering a subsea composite pipeline assembly having a first carrier pipe extending in a longitudinal direction and one or more conduit lines extending in the longitudinal direction, the method steps comprising: a first cutting operation comprising the steps: positioning a submersible bundle cutter on the carrier pipe; (i) cutting a window in the first carrier pipe in the longitudinal direction at a predetermined location; and/or (ii) performing a partial cross-sectional cut in the first carrier pipe in the radial direction at a predetermined location; performing a severing cut at the window and/or the partial cross-sectional cut location to fully sever the subsea composite pipeline assembly; and retrieving the carrier pipe back to surface.

Optionally, the first cutting operation comprises the steps: exposing the one or more conduit lines; and severing the one or more conduit lines.

Optionally, the method comprises: retrieving the window back to a water surface; and the window is upwardly facing the water surface and is arranged to be cut in at least one of: two or more circumferential cut window sections; two or more circumferential disc window sections; and/or a circumferential elongate barbell window section extending in the longitudinal direction.

Optionally, the partial cross-sectional is arranged to form: a support remnant in the first carrier pipe and/or the one or more conduit lines that maintains the structural integrity of the first carrier pipe.

Optionally, the first cutting operation comprises the steps: severing and/or partial severing the subsea composite pipeline assembly between the first cut section and the second cut section; and retrieving the first joint to the water surface.

Optionally, the subsea composite pipeline assembly comprises a second joint and the method steps comprise: repositioning the subsea bundle cutter from the first joint to the second joint; and repeating the first cutting operation and substituting the first joint for the second joint.

### BRIEF DESCRIPTION OF THE DRAWINGS

Figure 1 is a magnified perspective view of a known subsea composite pipeline assembly;
Figure 2 is a cross-sectional view of a schematic illustrating a known joint including a support spacer;
Figure 3a is a schematic of a submersible bundle cutter in accordance with a first embodiment of the present disclosure;
Figure 3b is a schematic of a submersible bundle cutter including a releasably securing arrangement in accordance with a second embodiment of the present disclosure;
Figure 4 is a schematic of a submersible bundle cutter including a control unit and a power unit in accordance with a third embodiment of the present disclosure;
Figure 5 is a schematic of a submersible bundle cutter including a driver unit in accordance with a fourth embodiment of the present disclosure.
Figure 6 is a first perspective view of the submersible bundle cutter in accordance with the fourth embodiment of the present disclosure;
Figure 7 is a second perspective view of the submersible bundle cutter in accordance with the fourth embodiment of the present disclosure;
Figure 8 is a third perspective view of the submersible bundle cutter in accordance with the fourth embodiment of the present disclosure.
Figure 9 is a workflow of a first method of recovering a subsea composite pipeline assembly by cutting a window extending in the longitudinal direction in accordance with a fifth embodiment of the present disclosure;
Figure 10 is a pictorial of the first method of recovering the subsea composite pipeline assembly by cutting a window extending in the longitudinal direction in accordance with the fifth embodiment of the present disclosure;
Figure 11a is a schematic of a first window profile in accordance with a sixth embodiment of the present disclosure;
Figure 11b is a schematic of a second window profile in accordance with a sixth embodiment of the present disclosure;
Figure 11c is a schematic of a third window profile in accordance with a sixth embodiment of the present disclosure;
Figure 11d is a schematic of a fourth window profile in accordance with a sixth embodiment of the present disclosure;
Figure 11e is a schematic of a fifth window profile in accordance with a sixth embodiment of the present disclosure;
Figure 11f is a schematic of a sixth window profile in accordance with a sixth embodiment of the present disclosure; Figure 11g is a schematic of a seventh window profile in accordance with a sixth embodiment of the present disclosure;
Figure 12 is a workflow of a second method of recovering a subsea composite pipeline assembly 100 by performing a partial cross-sectional cut in the first joint in the radial direction in accordance with a seventh embodiment of the present disclosure; and
Figure 13 is a pictorial representation of the second method of recovering the subsea composite pipeline assembly by performing a partial cross-sectional cut in the first joint in the radial direction in accordance with the seventh embodiment of the present disclosure.

### DETAILED DESCRIPTION

A general definition of the word 'composite' is now provided: composite refers to an assembly a first distinct element and a second distinct element wherein the first element and second element are interconnected within the assembly, such as conduits, pipes, supporting elements functioning as a cohesive system. Compositive does not refer to the material science of combining polymer, metallic, and/or ceramic matter into a bulk material.

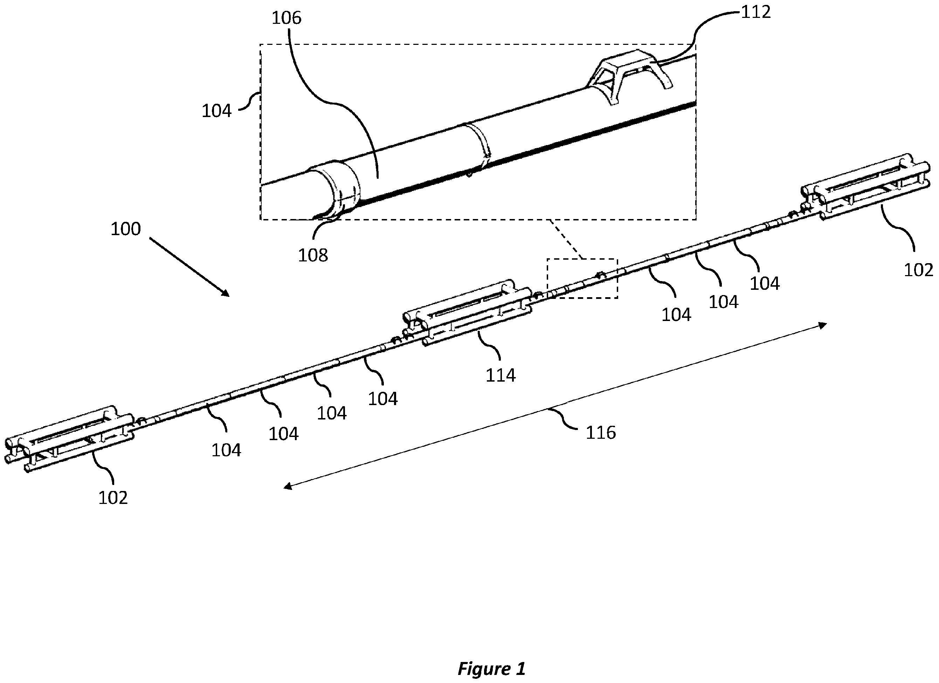

Figure 1 is a magnified perspective view of a known composite pipeline assembly 100.

The compositive pipeline assembly 100 may be arranged as a subsea bundle installation as illustrated in figure 1, which can include one or more towhead structures 102. The towhead 102 is located at one or both ends of the subsea composite pipeline assembly 100. The towhead serves as a connection and integration point for various components within the subsea composite pipeline assembly 100. The towhead 102 may house a connector (not shown), a manifold (not shown), a valve (not shown), and other equipment (not shown) to enable the subsea composite pipeline assembly 100 to link seamlessly to subsea infrastructure, such as a wells, a manifold, a flowline, or a tie-in point.

The subsea composite pipeline assembly 100 may also include one or midline structures 114. The midline structure 114 is located along the length of the subsea composite pipeline assembly 100, rather than at its ends (where the towheads 102 are typically positioned). Midline structures 114 serve as an intermediate connection hub for subsea components, such as a subsea pipeline (not shown), a subsea umbilical (not shown), or the flowlines (not shown), and can facilitate tie-ins to other subsea systems or infrastructure (not shown). The midline structure 114 provides structural support and alignment for the subsea installation bundle 100.

The subsea composite pipeline assembly 100 may also include one or more joints 104. The joint is an elongate structural segment that connects with adjacent joints and may link back to the towhead 102 and/or the midline structure 104.

The joint 104 may include a carrier pipe 106. The carrier pipe 106 is a rigid pipe having an outer circumference that encloses one or more internal components of the joint 104 and extends in a longitudinal direction 116. The carrier pipe 106 may comprise an upper hemi-circumferential section generally facing the sea surface in use, and a lower hemi-circumferential section, generally facing the sea floor in use. The carrier pipe 106 provides mechanical protection against environmental forces and may also contribute to thermal insulation and buoyancy during deployment.

The joint 104 may also include an anode 108. The anode 108 provides cathodic protection from the subsea environment. For example, the anode 108 may be formed from a more electrochemical active material, such an aluminium or zinc alloy and may be wrapped around an outer circumference of the carrier pipe 106. The anode 108 cathodic protection works by providing an external source of electrons to the carrier pipe, which is typically a metal surface, suppressing the metal surface from losing electrons through oxidation.

The joint 104 may also include a chain attachment (not shown) which acts as an anchor point for a trimming chain which are used to correct the trim of the joint 104 and to aide towing and installation. In one example, the chain attachment secures the subsea composite pipeline assembly 100 with straps rather than welded type attachment points and remain post installation.

The joint 104 may include a valve protection structure 112 to provide a shield for a subsea valve assembly.

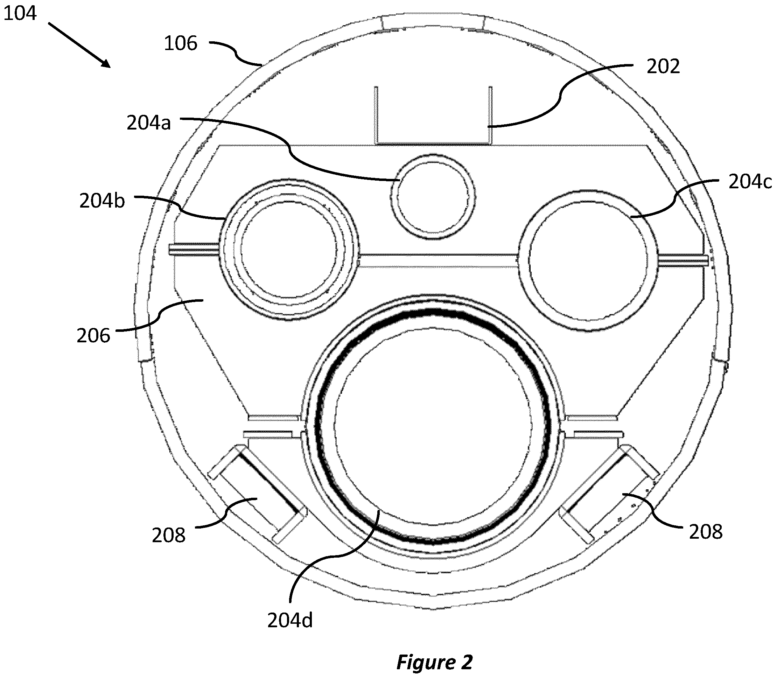

Figure 2 is a cross-sectional view of a schematic illustrating the known joint 104 including a support spacer 206.

There are many different possible internal configurations of the joint 104 and they are custom made to the specific application, and therefore figure 2 is only an illustrate example of the common features of the joint 104 arranged as part of subsea bundle installation, wherein in this configuration the joint 104 may be referred to as a bundle joint.

The joint 104 may include a containment arrangement 202 to securely retain one or more control cables and/or control tubes. The control cables may transmit an electrical or a fibre optic data signal to control an offshore asset. In the case of control tubes, the control tubes may carry hydraulic fluids to control the offshore asset.

The joint 104 may also include one or more conduit lines 204a, 204b, 204c, 204d. For example, the one more conduit lines may include a flowline that functions to transport the fluids or gases in the subsea composite pipeline assembly 100. In a more specific example, the flowline can be a water injection pipeline 204a or a monoethylene glycol (MEG) injection line 204b for hydrate prevention. The flowline may also include a production line 204c transferring production fluids or gases back from an offshore asset. Alternatively, the flowline 204d can also transfer ancillary fluids for subsea equipment operation. The flowline may be constructed from single-walled for standard operations or double-walled (pipe-in-pipe construction) for enhanced thermal insulation, structural integrity, mechanical protection, monitoring and maintenance, corrosion protection or protection against leakage. The containment arrangement 202 may also route one or more powerline to transfer power for subsea operations. **In** containment arrangement 202 may also be a powerline to transfer power for subsea operations. The powerline may include a conductive core (typically made of copper or aluminium) surrounded by an electrical insulating sheath. When left in situ, the subsea composite pipeline assembly may also pose a snagging hazard to other maritime users, such as fishermen. For example, the carrier pipe may corrode and expose the components within the joint 104. Rock can be deposited on the subsea composite pipeline assembly to mitigate the possibility of it becoming a snagging hazard, however rock can become displaced over time, and pollution will occur from residual plastics and coatings that remain when the subsea composite pipeline assembly 100 corrodes.

The joint 104 may also include a support spacer 206 coupled to the one more pipelines 204a, 204b, 204c, 204d and the containment arrangement 202. The support spacer 206 may be arranged as a transverse spacer, distributed along the length of the joint 104 facilitating bundle fabrication and insertion into the carrier pipe 106. The support spacer 206 provides mechanical stability, alignment, and separation for the one or more conduit lines 204 and/or the containment arrangement 202 and ensures that they remain securely positioned within the carrier pipe 106, preventing damage and maintaining operational efficiency during assembly, transportation, installation, and use.

The joint 104 may also include a carriage 208 resting on the inside of the carrier pipe 106 and coupled to the support structure 206. The carriage 208 contributes to the internal stability joint 104 and enables a degree of movement of the one or more conduit lines independent of the carrier pipe 106.

The subsea installation bundle 100 typically range from 2 km to 7 km in length, limited by onshore fabrication facility space. For longer bundles, multiple sections can be connected end-to-end, creating challenges in mechanical and fluid communication between sections. This approach avoids traditional installation methods, such as reel-lay or a S-lay, which lack the protection and integration benefits of bundles.

During installation, the subsea compositive pipeline assembly 100 is initially filled with air and supported by buoyancy modules, is towed to the site and ballasted with seawater to sink the subsea compositive pipeline assembly 100 to a controlled depth thereby minimising fatigue so that are not subject to environmental conditions of the water's surface. Ballasting stabilizes the subsea compositive pipeline assembly 100 but complicates eventual recovery, as residual seawater can destabilize the subsea installation bundle 100 structure during refloating.

It is undesirable for ecology reasons to leave subsea installation bundles 100 in-situ when decommissioning, either for ecology concerns related to corrosion and/or fluid leaks in the surrounding sea. In addition, the quantity of rock required to bury longer subsea compositive pipeline assembly 100 is often economically impractical.

The subsea compositive pipeline assembly 100 may alternative to the bundle configuration illustrated in figure 2 be arranged as a pipe-in-pipe (PiP) system in which one conduit line 204a, 204b, 204c, 204d is enclosed within the carrier pipe 106 forming a dual-layer structure.

Subsea composite pipeline assemblies 100 face significant challenges for recovery. For example, cutting the subsea installation bundle 100 cleanly is problematic because of the diverse internal elements 202, 204a, 204b, 204c, 204d, 206, 208 within the carrier pipe 106 which may all be made from differential materials, with different shear mechanical properties that respond differently to different cutting force.

Dewatering is one known proposed technique for recovery involves draining water and injecting a lighter fluid or gas. Dewatering recovery techniques can also include adding discrete buoyancy to elevate sections of the carrier pipe 106.

An example of typical dewatering process for recovery is now provided:
1) Discrete buoyancy is added to elevate the carrier pipe 106, forming inclined slopes toward a drainage outlet (not shown).
2) Water drains along the elevated carrier pipe 106 and exits through drainage outlets, often located at the towhead 102
3) The carrier pipe 106 is injected with dewatering fluid to expel remaining water and maintain stability.

Elevating the carrier pipe 106 may involve restraining the carrier pipe 106 at predetermined points to control its position, using weights or the apparent weight of towheads 102.

However, dewatering presents a significant risk to the environment as it requires the carrier pipe 106 to maintain buoyancy sealing integrity and structural integrity during recovery. If during recovery carrier pipe 106 experiences catastrophic failure it risks uncontrolled descent into the seabed and spilling the internal elements 202, 204a, 204b, 204c, 204d, 206, 208 of the joint 104.

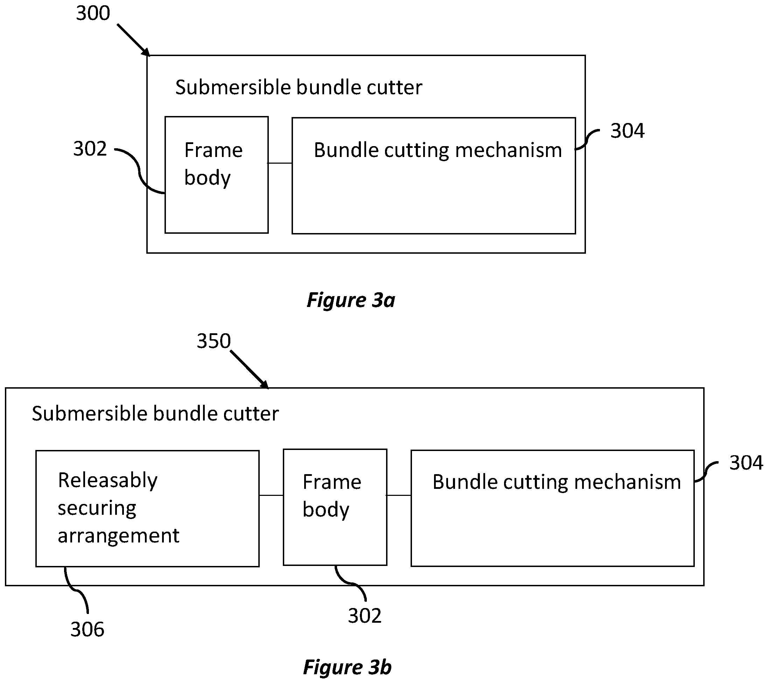

Figure 3a is a schematic of a submersible bundle cutter 300 in accordance with a first embodiment of the present disclosure.

The submersible bundle cutter 300 is for cutting a subsea composite pipeline assembly 100.

The submersible bundle cutter may include a frame body 302. The frame body 302 is a structure that supports and houses the various components of the submersible bundle cutter 300. The frame body 302 provides stability, durability, and alignment, facilitating safe handling in subsea environments. The frame body may be tethered to a submersible vehicle, such as a remotely operated vehicle (ROV), or tethered to a surface ship, such as through an umbilical cable. In one example, the frame body 302 is formed from a plurality of tubular struts (not shown) thereby reducing material requirements and water drag.

The submersible bundle cutter 300 may also include a bundle cutting mechanism 304. The bundle cutting mechanism 304 may be coupled to the frame body 302 and is designed to create precise and controlled cuts in a subsea composite pipeline assembly, and more specifically on the outer circumference of the carrier pipe 106. The bundle cutting mechanism 304 is specifically configured to cut a window that extends in the longitudinal direction of the carrier pipe, creating access in the longitudinal direction to one or more internal elements 202, 204a, 204b, 204c, 204d, 206, 208 within the joint 104. The submersible bundle cutter 300 may repeat the cutting of the windows, thereby cutting 2 or more windows on the carrier pipe 106

Figure 3b is a schematic of a submersible bundle cutter 350 including a releasably securing arrangement 306 in accordance with a second embodiment of the present disclosure.

The submersible bundle cutter 350 may share any features or components previously described with the submersible bundle cutter 300 and where possible reference numerals have been kept the same.

The releasably securing arrangement 306 is coupled to the frame body 302 and is designed to releasably attach and secure the submersible bundle cutter 350 to the carrier pipe during subsea cutting operations. The releasably securing arrangement 306 ensures the submersible bundle cutter 350 remains stable and precisely positioned while allowing it to be disengaged and repositioned on the subsea composite pipeline assembly 100 or retrieved as needed. For example, using the releasably securing arrangement 306, the submersible bundle cutter 350 may be secured to a first carrier pipe 106, a window cutting operation is performed. The releasably securing arrangement may be unsecured and the submersible bundle cutter 350 moved to an adjacent second carrier pipe 106 and secured to the second carrier pipe 106.

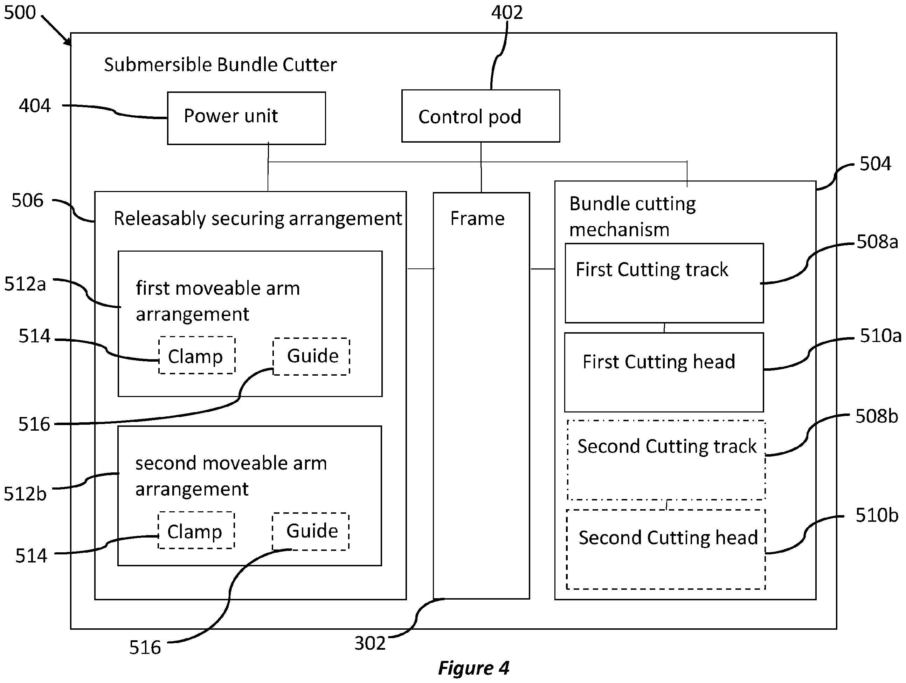

Figure 4 is a schematic of a submersible bundle cutter 500 including a control unit 402 and a power unit 404 in accordance with a third embodiment of the present disclosure.

The submersible bundle cutter 500 may share any features or components previously described with the submersible bundle cutter 300, 350 and where possible reference numerals have been kept the same.

The submersible bundle cutter 500 may include a bundle cutting mechanism 504. The bundle cutting mechanism 504 may share any features or components previously described with the bundle cutting mechanism 304.

The bundle cutting mechanism 504 may include a first cutting track 508a and/or a second cutting track 508b which will herein be collectively referred to as the cutting track 508a, 508b. The bundle cutting mechanism 504 may also include a first cutting head 510a coupled to the first cutting track 508a and/or a second cutting head 510b coupled to the second cutting track 510b, which will herein be collectively referred to as the cutting head 510a, 510b.

The cutting track 508a, 508b may be a semicircular or hemi-circumferential grooved track that follows a profile of the outer circumference of the carrier pipe 106. The cutting track 508a, 508b may house the cutting head 510a, 510b allowing it to traverse the cutting track 508a, 508b. The cutting head 510a 510b movement within the cutting track 508a, 508b may be driven by any locomotion mechanism, such as a chain (not shown), a piston-arm (not shown) or a gear mechanism. The cutting track 508a 508b ensures controlled tangential movement and accurate cutting along the desired path while maintaining a stable and consistent trajectory.

Alternatively, the cutting head 510a, 510b may also mounted on, or arranged as, an adjustable cutting arm (not shown) that can be arranged to be radially moveable such that extends outwards from the submersible bundle cutter 500 to come into contact with the carrier pipe 106 or any the one or more internal elements 202, 204a, 204b, 204c, 204d, 206, 208 202, thereby ensuring that precisely aligned cuts are made.

The cutting head 508a, 508b cutting action may be performed by various cutting head technologies, including but not limited to a rotary cutter, a wire cutter, reciprocating cutter, an abrasive water jet, a plasma cutter, and/or a laser system.

The power unit 404 is responsible for supplying the necessary energy to operate the bundle cutting mechanism 504. The power unit 404 ensures consistent and reliable performance by delivering power to drive the cutting heads 510a, 510b, the adjustable cutting arms, the cutting track 508a, 508b, hydraulic systems involved in the cutting process. In a specific example, the power unit 404 is a hydraulic unit. In an alternative example the power unit 404 acts only as a transfer unit, and energy is supplied through the umbilical cable.

The control pod 402 may be formed from a pressure resistant housing suitable for subsea use and the control pod 402 is responsible for managing and coordinating the operation of the bundle cutting mechanism 504, the releasably securing arrangement 506, and may also regulate the power unit 404. The control pod 402 ensures precision, safety, and efficiency by regulating cutting parameters, monitoring performance, and providing feedback for real-time adjustments during subsea cutting. The control pod 402 may include an electronic circuit board, a microprocessor and a memory module. In a specific example, the control pod 402 may receive a control signal from a user interface via the umbilical cable. A user may observe the cutting operation from a subsea camera that may be mounted on the subsea bundle cutter or an ROV or within the proximity of the bundle cutting mechanism 504. In an alternative example, the control pod 402 is an autonomous system based on one or more predetermined work instructions following a precise cutting timing sequence and/or a deep learning algorithms stored on the memory module.

The submersible bundle cutter 500 may include a releasably securing arrangement 506. The releasably securing arrangement 506 may share any features or components previously described with the releasably securing arrangement 306.

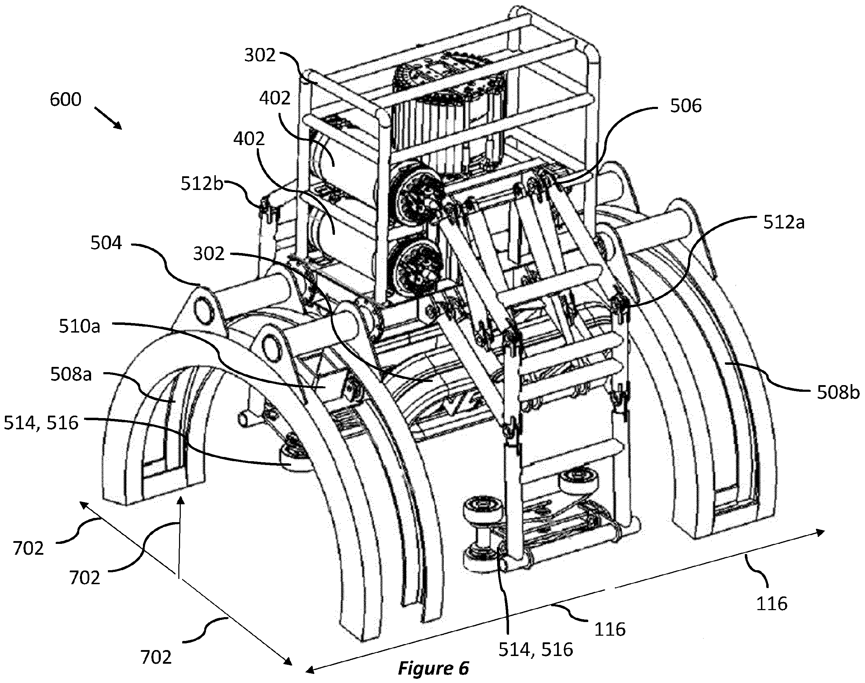

The releasably securing arrangement 506 may include a first moveable arm arrangement 512a and second moveable arm arrangement 512b, herein referred to collectively as the moveable arm arrangement 512a, 512b. The moveable arm arrangement may extend outwardly in a radial direction 702 (with reference to Figure 6) from the frame body 302 and configured to selectively grapple the outer circumference of the carrier pipe 106. The releasably securing arrangement 506 may include a clamp 514 and/or a guide 516. The clamp 514 may be a grapple or a jaws mechanism to securely grip the outer circumference of the carrier pipe 106 thereby anchoring the submersible bundle cutter 500 in place. The guide 516 may be a roller guide, which may be a wheeled assembly supporting movement along the outer circumference of the carrier pipe 106.

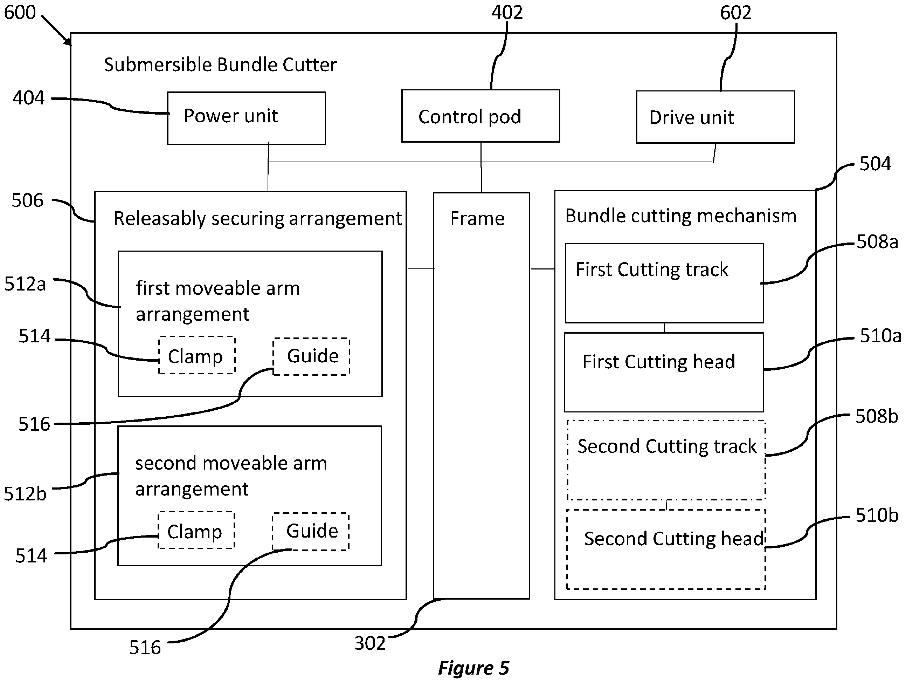

Figure 5 is a schematic of a submersible bundle cutter 600 including a driver unit 602 in accordance with a fourth embodiment of the present disclosure.

The drive unit 602 is designed to enable independent movement of the submersible cutter to move along the subsea composite pipeline assembly, via the carrier pipe 106. The drive unit may traverse between the carrier pipe 106 to an adjacent carrier pipe 106. The drive unit 602 may include a powered treaded track and/or a wheeled construction to provide controlled locomotion across the carrier pipe 106 ensuring precise positioning of the bundle cutter 600, even in challenging conditions such as corroded surfaces or poor visibility. In a specific example, the drive unit 602 is hydraulically powered by the power unit 404 and/or by the umbilical cable.

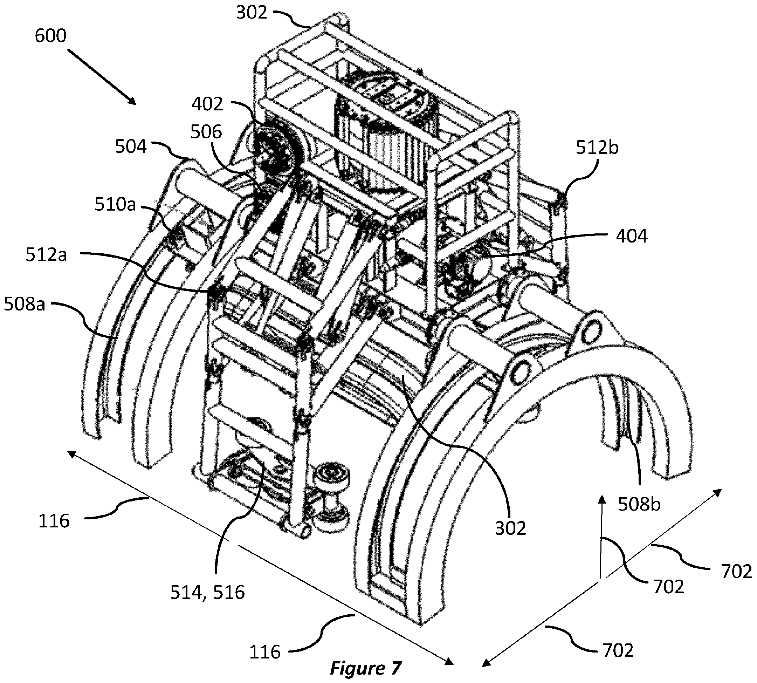

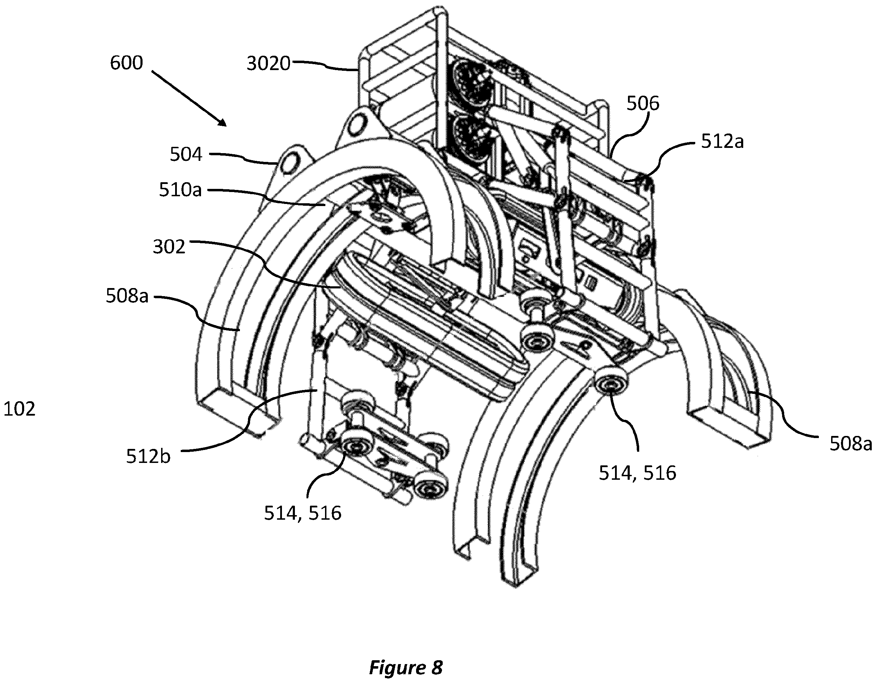

Figure 6 is a first perspective view of the submersible bundle cutter 600 in accordance with a fourth embodiment of the present disclosure; Figure 7 is a second perspective view of the submersible bundle cutter 600 in accordance with a fourth embodiment of the present disclosure; Figure 8 is a third perspective view of the submersible bundle cutter 600 in accordance with a fourth embodiment of the present disclosure.

The radial direction 702 and the longitudinal direction 116 is depicted on Figure 6 and Figure 7. In Figures 6, 7 and 8 the first cutting track 508a is forwardly positioned in longitudinal direction and the second cutting track 508b is rearwardly positioned in the longitudinal direction.

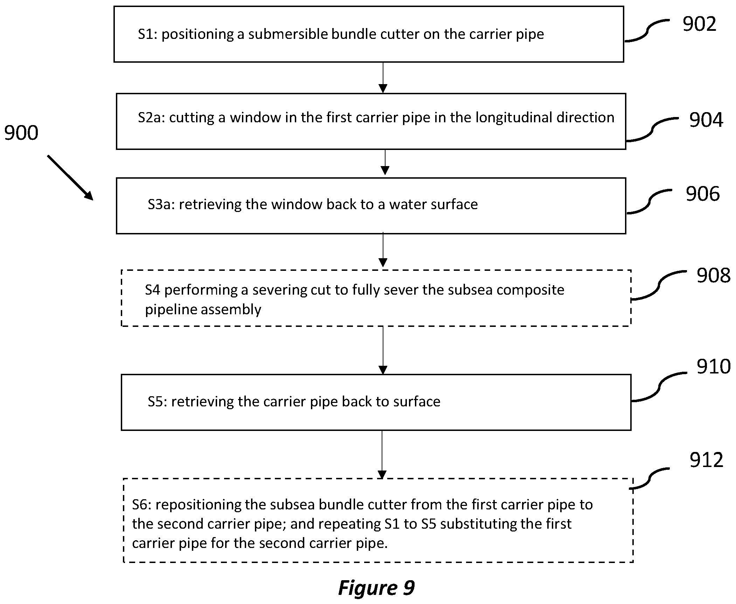

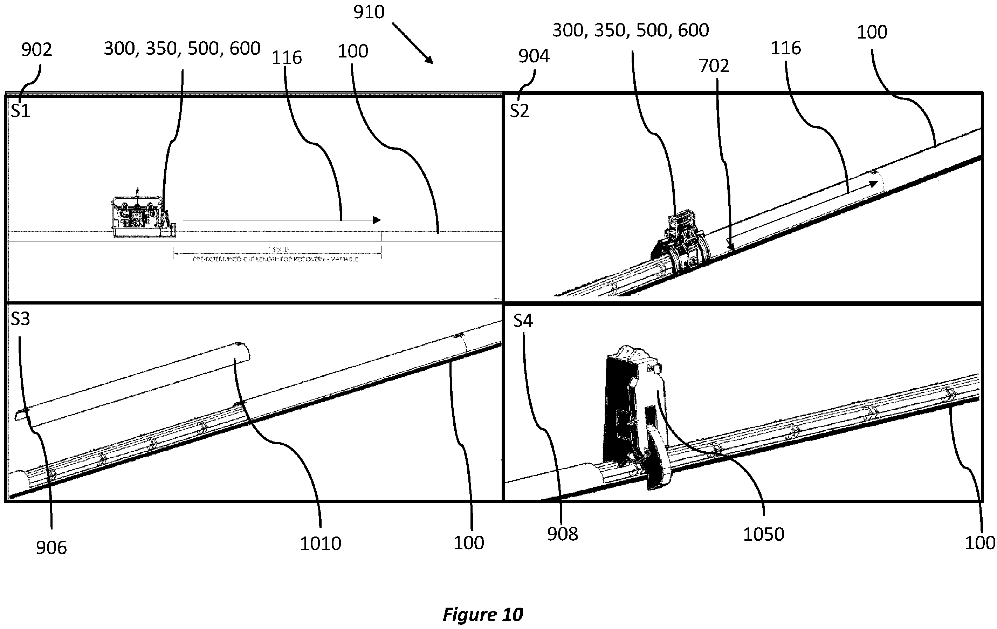

Figure 9 is a workflow of a first method 900 of recovering a subsea composite pipeline assembly 100 by cutting a window 1010 extending in the longitudinal direction in accordance with a fifth embodiment of the present disclosure. Figure 10 is a pictorial of the first method 900 of recovering the subsea composite pipeline assembly 100 by cutting a window 1010 extending in the longitudinal direction in accordance with a fifth embodiment of the present disclosure. Figure 9 and Figure 10 will be discussed together respectively.

The first method 900 may include the steps S1 902, S2 904, S3a 906, S4 908, S5 910 and S6 912.

S1: 902 Positioning a submersible bundle cutter 300, 350, 500, 600 on the carrier pipe 106. S1 902 involves deploying, aligning, and securely attaching the submersible bundle cutter 300, 350, 500, 600 onto the carrier pipe 106. This step establishes the foundation for precise and efficient cutting and recovery operations, ensuring that the cutter 300, 350, 500, 600 is positioned correctly and ready for the next phase of the first method of recovery 900.

S2a: 904 Cutting the window in the first carrier pipe 106 in the longitudinal direction. S2a involves cutting a window 1010 extending in longitudinal direction in the first carrier pipe 106 using the bundle cutting mechanism 304, 504. This step ensures controlled access to the joints 104 internal elements 202, 204a, 204b, 204c, 204d, 206, 208 forming the basis for subsequent operations. Step S2a 904. S2a 904 may be repeated any number of times required by the operation to form 2 or more windows 1010.

S3a: 906 Retrieving the window back to a water surface. S3a 906 involves securing and transporting the now detached window from the carrier pipe to the water surface. This step ensures the safe removal of cut material, preventing subsea debris and facilitating subsequent operations in the recovery workflow. For example, the now detached window may now be grappled by a gripping mechanism using an ROV or a lifting line from a surface vessel. The gripping mechanism ensures the detached window is held firmly to prevent it from dropping or drifting in subsea currents. The window cutting profile may include features that allow for gripping or slinging of the window or partial removal of the window, allowing it to be recovered with the carrier pipe 106.

S4 908 involves performing a severing cut to fully sever the subsea composite pipeline assembly 100. The severing may be performed using the subsea bundle cutting mechanism 304, 504 or alternatively by the surface vessel using a shearing tool 1050. S4 908 may be performed as single stage operation wherein the entire joint 104 is severed in a single cut or as a multi-stage operate wherein the one or more of the conduit lines 204a, 204b, 204c, 204d and/or the containment arrangement 202 and/or any cabling within the containment arrangement 202 maybe severed individual before cutting the subsea composite pipeline assembly.

S4 908 may be repeated any number of times required by the operation to ensure the severing of one or more of the conduit lines 204a, 204b, 204c, 204d and/or the containment arrangement 202 and/or any cabling within the containment arrangement 202.

S5: 910 Retrieving the carrier pipe to surface. S5 refers to the step where the carrier pipe 106, now separated carrier pipe 106 complete with internal conduit lines 204a, 204b, 204c, 204d and any control cables or tubes routed in containment arrangement 202 is lifted from the seabed and brought to the surface. The same methods of recovery may be used for the carrier pipe 106 as the window discussed in s3a 906.

S6: 912 Repositioning the subsea bundle cutter 300, 350, 500, 600 from the first carrier pipe to the second carrier pipe; and repeating S1 to S5 substituting the first carrier pipe for the second carrier pipe. S6 912 involves repositioning the submersible bundle cutter 300, 350, 500, 600 from the first carrier pipe 106 to the second 106 then repeating the recovery workflow (S1 to S5) on the second carrier pipe 106. This step enables the systematic and efficient handling of multiple carrier pipe 106 within a subsea composite pipeline assembly 100 until all required joints 104 are removed.

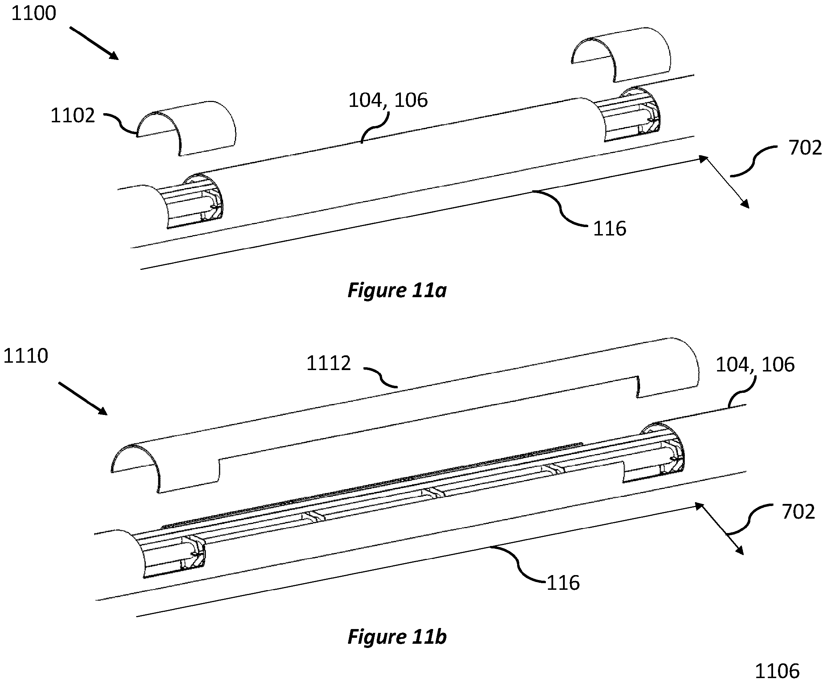

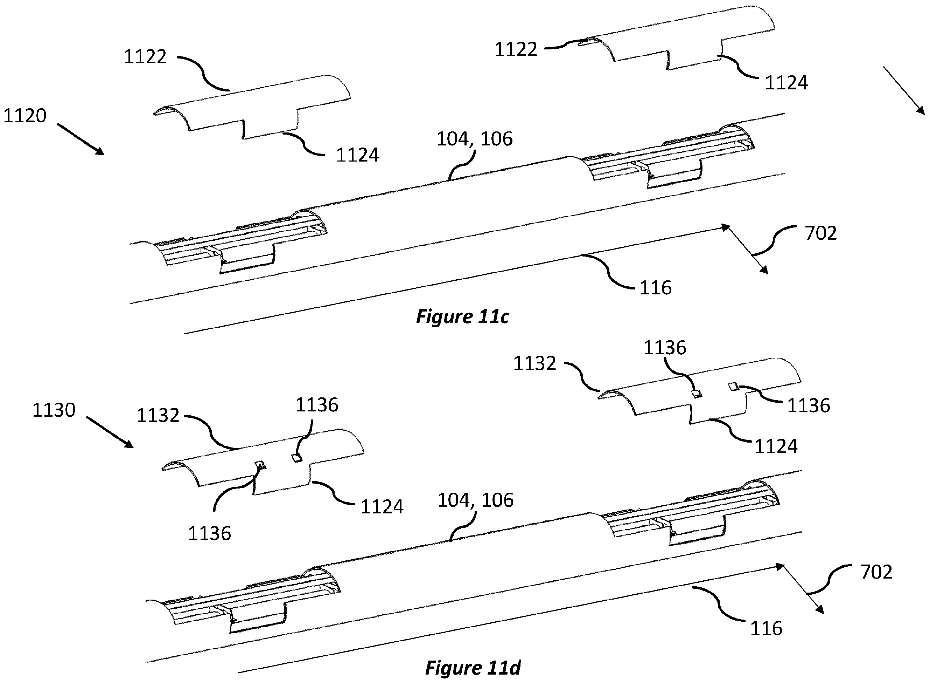

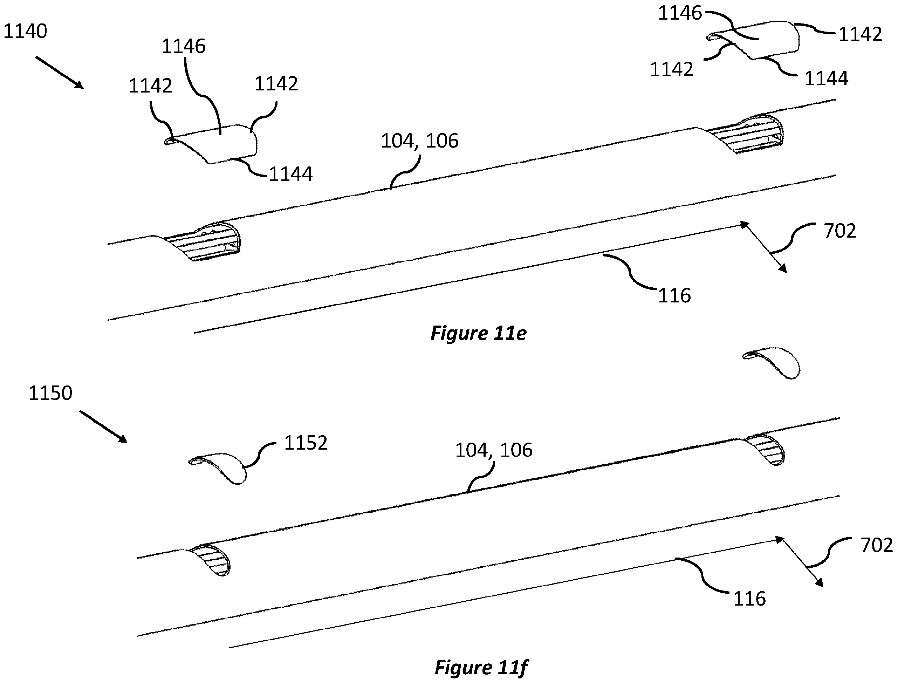

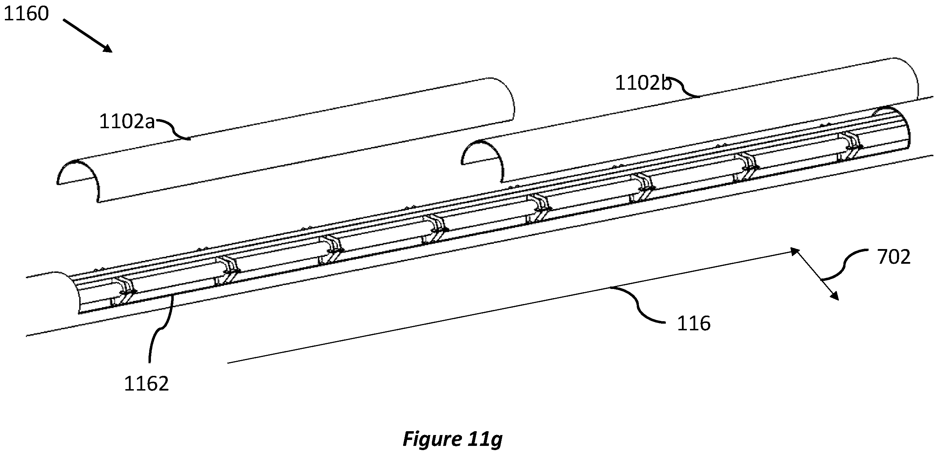

Figure 11a is a schematic of a first window profile 1100 in accordance with a sixth embodiment of the present disclosure; Figure 11b is a schematic of a second window profile 1110 in accordance with a sixth embodiment of the present disclosure; Figure 11c is a schematic of a third window profile 1120 in accordance with a sixth embodiment of the present disclosure; Figure 11d is a schematic of a fourth window profile 1130 in accordance with a sixth embodiment of the present disclosure; Figure 11e is a schematic of a fifth window profile 1140 in accordance with a sixth embodiment of the present disclosure; Figure 11f is a schematic of a sixth window profile 1150 in accordance with a sixth embodiment of the present disclosure; Figure 11g is a schematic of a seventh window profile 1160 in accordance with a sixth embodiment of the present disclosure.

The first window profile 1100, the second window profile 1110, the third window profile 1120, the fourth window profile 1130, the fifth window profile 1140, the sixth window profile 1150 and the seventh window profile 1160 may share any features or components previously described with the window 1010.

The first window profile 1100 includes two or more circumferential cut window sections 1102 as depicted by Figure 11a.

The second window profile 1110 includes a circumferential elongate barbell window section 1112 extending in the longitudinal direction as depicted by Figure 11b. The circumferential elongate barbell window section 1112 ensures that when the circumferential elongate barbell window section 1112 detaches from the carrier pipe 106, it falls within the joint 104 in suitable manner to enable recovery. That is, a straight rectangular cut profile may be more difficult to grip with the gripping mechanism during recovery if it collapses within the joint 104.

The third window profile 1120 includes two or more circumferential cut window sections 1122 each including a circumferential extension 1124 as depicted by Figure 11c.

The fourth window profile 1130 includes two or more circumferential cut window sections 1132 including a circumferential extension 1124 and one or more recovery apertures 1136 as depicted by Figure 11d. The recovery apertures may be used to as grappling points during the recovery of the fourth window profile 1130.

The fifth window profile 1140 includes two or more circumferential curved window sections 1146 including two or more curved edges 1142 extending in the radial direction 702 and two or more straight edges 1144 extending in the longitudinal direction 116 as depicted by Figure 11d. The two or more circumferential curved window sections 1146 ensures that when the window detaches from the carrier pipe 106, it falls within the joint 104 in suitable manner to enable recovery.

The sixth window profile 1150 includes two or more circumferential disc window sections 1152 as depicted by Figure 11f.

The seventh window profile 1160 includes a first circumferential cut window sections 1102a adjacent to a second circumferential cut window section 1102b thereby effectively extending the length of an exposed portion 1162 as depicted by Figure 11g.

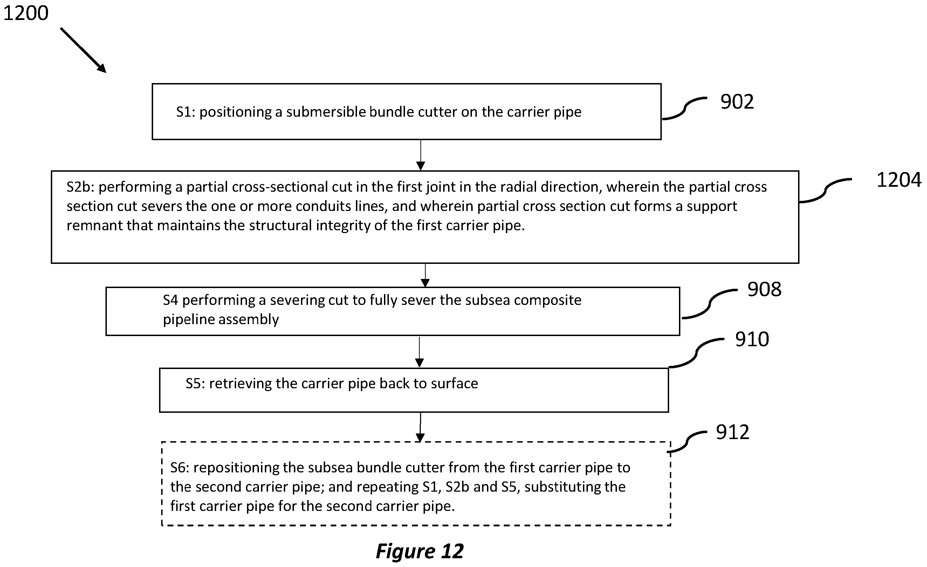

Figure 12 illustrates a workflow of a second method 1200 of recovering a subsea composite pipeline assembly 100 by performing a partial cross-sectional cut in the first joint 104 in the radial direction, in accordance with a seventh embodiment of the present disclosure. It comprises successive steps:
- S1: positioning a submersible bundle cutter on the carrier pipe
- S2b: performing a partial cross-sectional cut in the first joint in the radial direction, wherein the partial cross section cut severs the one or more conduits lines, and wherein partial cross section cut forms a support remnant that maintains the structural integrity of the first carrier pipe. S4: performing a severing cut to fully sever the subsea composite pipeline assembly
- S5: retrieving the carrier pipe back to surface
- Next, optionally step S6 can be carried out: repositioning the subsea bundle cutter from the first carrier pipe to the second carrier pipe; and repeating S1, S2b and S5, substituting the first carrier pipe for the second carrier pipe.

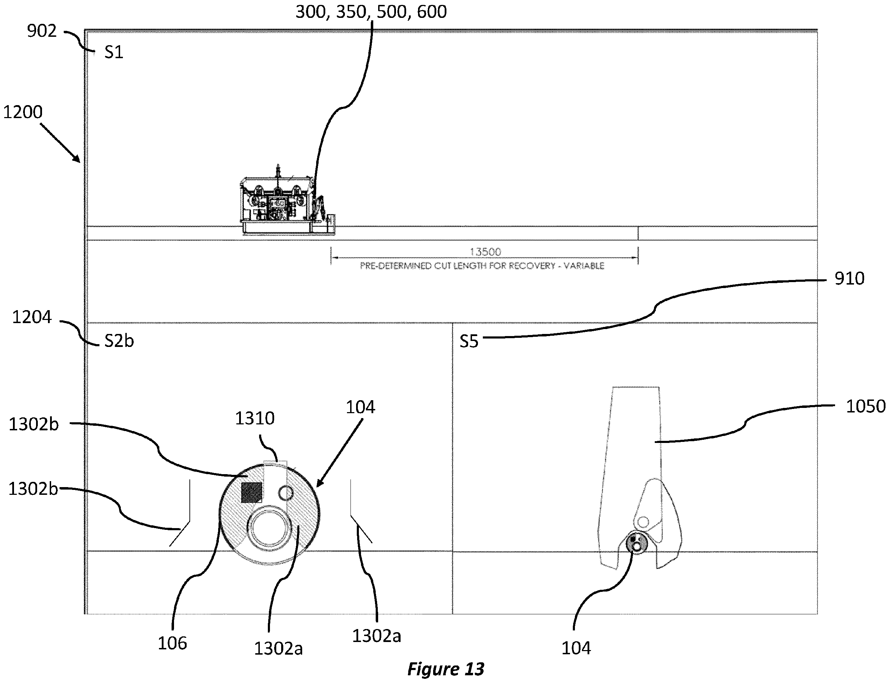

Figure 13 is a pictorial representation of the second method 1200 of recovering the subsea composite pipeline assembly 100 by performing a partial cross-sectional cut in the first joint 104 in the radial direction in accordance with the seventh embodiment of the present disclosure. Figure 12 and Figure 13 will be discussed together respectively.

The second method 1200 may include any of the steps S1 902, S2b 1204, S4 908, S5 910 and S6 912. The second method 1200 may repeat any of the steps S1 902, S2b 1204, S4 908, S5 910 and S6 912 respectively. The second method may share step S1 902, S4 908, S5 910 and S6 912 previously described for first method 900.

S2b 1204 performs a partial cross-sectional cut in the first joint 104 in the radial direction 702, wherein the partial cross section cut severs the one or more conduits lines 204a, 204b, 204c, 204d, and wherein partial cross section cut forms a support remnant 1310 that maintains the structural integrity of the first carrier pipe 104.

For example, S2b 1204 may perform a partial cross-sectional cut in the first carrier pipe 106 in the radial direction 702, wherein the partial cross section cut partially or fully severs the one or more conduits lines 204a, 204b, 204c, 204d, and wherein partial cross section cut forms a support remnant 1310 that maintains the structural integrity of the first carrier pipe 106. An example of the support remnant maintaining the structural integrity of the first carrier pipe is now provided; the support remnant 1310 may be a continuous strip on an upwardly facing side of the first carrier pipe 106 that prevents the now severed carrier pipe 106 from inwardly collapsing in on the cutting operation and obstructing the cutting operation. Alternatively, the support remnant 1310 may be provided by may be retained by intact one or more intact conduit line 204a, 204b, 204c or 204d. It will be appreciated that step s2b1204 may be repeated on the first carrier pipe to ensure the one or more conduit lines 204a, 204b, 204c, 204d. In a further example, the partial cross-sectional cut may be performed as 2 separate cuts, such as the on 2 or more opposing surfaces of the first carrier pipe 106 separated by the support remnant 1310, as depicted in Figure 13.

S5 910 involves the severing and/or partial severing of the subsea composite pipeline assembly 100 between the first cut section 1302a and the second cut section; and then retrieving the first joint 104 to the water surface using one of previously described methods of recovery under s3 906.

It is to be appreciated that various improvements and modifications can be made to the above without departing from the scope of the disclosure.

## Claims

1. A submersible bundle cutter for cutting a subsea composite pipeline assembly having a first carrier pipe extending in a longitudinal direction, the bundle cutter comprising:
a frame body configured to interface with a submersible vehicle and/or an umbilical cable;
a bundle cutting mechanism coupled to the frame body configured to cut a first window extending in the longitudinal direction.

2. The submersible bundle cutter of claim 1, wherein the carrier pipe has an outer circumference, the submersible bundle cutter comprising:
a releasably securing arrangement coupled to the frame body and configured to releasably secure the submersible bundle cutter to the first carrier pipe.

3. The submersible bundle cutter of claim 2, wherein the releasably securing arrangement comprises:
a first moveable arm arrangement extending outwardly in a radial direction from the frame body and configured to selectively grapple the outer circumference;
a second moveable arm arrangement extending outwardly in a radial direction from the frame body and configured to selectively grapple the outer circumference.

4. The submersible bundle cutter of claim 3, wherein the first and/or second movable arm arrangement comprises at least one of:
a clamp configured to grip the outer circumference; and/or
a roller guide configured to support wheelable traversal of the submersible bundle cutter along the carrier pipe.

5. The submersible bundle cutter of claim 4 comprising:
a driving unit coupled to the frame and configured to provide locomotion to the submersible bundle thereby moveably repositioning the submersible bundle cutter at least in the longitudinal direction.; and wherein the diving unit comprises: one or more treads configured to traverse the first carrier pipe.

6. The submersible bundle cutter of claim 4 wherein the subsea bundle cutter is releasably coupled to a submersible craft configured to position the submersible bundle cutter in the longitudinal direction.

7. The submersible bundle cutter of any of claims 2 to 6, wherein the bundle cutting mechanism comprises:
i) a first cutting track arranged to provide a first groove that hemi-circumferential follows the outer circumference; or
ii) a first cutting arm configured to be movably positionable on the outer circumference;
a first cutting head coupled to the first groove or the first cutting arm and the first cutting head is moveably positionable on the outer circumference, and wherein the first cutting head is configured to sever the first carrier pipe.

8. The submersible bundle cutter of claim 7, wherein the bundle cutting mechanism comprises:
i) a second cutting track arranged to provide a second groove that hemi-circumferential follows the outer circumference; or
ii) a second cutting arm configured to be movably positionable on the outer circumference;
a second cutting head coupled to the first groove or the second cutting arm and the second cutting head is moveably positionable on the outer circumference, and wherein the second cutting head is configured to sever the first carrier pipe.

9. The submersible bundle cutter of claim 8 wherein in use the first cutting track is forwardly positioned in longitudinal direction and the second cutting track is rearwardly positioned in the longitudinal direction

10. A method of recovering a subsea composite pipeline assembly having a first carrier pipe extending in a longitudinal direction and one or more conduit lines extending in the longitudinal direction, the method steps comprising:
a first cutting operation comprising the steps:
positioning a submersible bundle cutter on the carrier pipe;
i) cutting a window in the first carrier pipe in the longitudinal direction at a predetermined location; and/or
ii) performing a partial cross-sectional cut in the first carrier pipe in the radial direction at a predetermined location;
performing a severing cut at the window and/or the partial cross-sectional cut location to fully sever the subsea composite pipeline assembly; and
retrieving the carrier pipe back to surface.

11. The method of recovering the subsea composite pipeline assembly of claim 10 wherein the first cutting operation comprises the steps:
exposing the one or more conduit lines; and
severing the one or more conduit lines.

12. The method of recovering the subsea composite pipeline assembly of claim 11, wherein the method comprises:
retrieving the window back to a water surface; and
wherein the window is upwardly facing the water surface and is arranged to be cut in at least one of:
two or more circumferential cut window sections;
two or more circumferential disc window sections; and/or
a circumferential elongate barbell window section extending in the longitudinal direction.

13. The method of recovering the subsea composite pipeline assembly of claim 10, wherein the partial cross-sectional is arranged to form:
a support remnant in the first carrier pipe and/or the one or more conduit lines that maintains the structural integrity of the first carrier pipe.

14. The method of recovering the subsea composite pipeline assembly of claim 13 wherein the first cutting operation comprises the steps:
severing and/or partial severing the subsea composite pipeline assembly between the first cut section and the second cut section; and
retrieving the first joint to the water surface.

15. The method of recovering the subsea composite pipeline assembly of any of claims 10 to 14, wherein subsea composite pipeline assembly comprises a second joint and the method steps comprise:
repositioning the subsea bundle cutter from the first joint to the second joint; and
repeating the first cutting operation and substituting the first joint for the second joint.
